# EUROPEAN PATENT SPECIFICATION

(11) **EP 2 173 825 B1**
(45) Date of publication and mention of the grant of the patent: **28.12.2016**
(21) Application number: 08843432.9
(22) Date of filing: 28.07.2008
(51) Int. Cl.: C09D 11/324, C09D 11/106

(54) **INK COMPOSITION AND METHOD FOR FORMING THE SAME**
TINTENZUSAMMENSETZUNG UND VERFAHREN ZU DEREN FORMUNG
COMPOSITION D'ENCRE ET SON PROCÉDÉ DE PRÉPARATION

(30) Priority: 30.07.2007 US 830317
(43) Date of publication of application: 14.04.2010
(73) Proprietor: Hewlett-Packard Development Company, L.P., Houston, TX 77070 (US)
(72) Inventor: RENGASWAMY, Sukanya, Corvallis Oregon 97330 (US); BLAIR, Robert J., Corvallis Oregon 97330 (US); VASUDEVAN, Sundar, Corvallis Oregon 97330 (US); WICKRAMANAYAKE, Palitha, Corvallis Oregon 97330 (US)
(74) Representative: Engelhard, Markus
(86) International application number: PCT/US2008/071361
(87) International publication number: WO 2009/058447

(56) References cited:
- EP-A1- 0 733 682
- EP-A1- 1 167 470
- EP-A2- 1 146 090
- US-A1- 2005 014 864
- US-A1- 2006 009 544
- US-A1- 2006 116 439
- US-A1- 2006 241 210
- US-A1- 2007 085 887
- US-A1- 2007 100 023

## Description

### BACKGROUND

The present invention relates generally to ink compositions and method(s) for forming the same.

Inkjet printing or recording systems are commonly used as an effective way of producing images on a print medium, such as paper. Generally, ink droplets are ejected from a nozzle at high speed by the inkjet recording system onto the paper to produce an image thereon. It is generally desirable to utilize an inkjet ink that produces an image (e.g., graphics, text, and/or combinations thereof) on a print medium that exhibits both aesthetically pleasing and long lasting print characteristics. Examples of such print characteristics include print quality (e.g., optical density, chroma, and/or the like) and durability (e.g., water fastness, water resistance, fade resistance, permanence, acid and alkaline high-liter smear resistance, and/or the like). In some instances, however, trade off(s) may occur between print quality and durability of the ink when the ink is deposited on the print medium. For example, some inks may have substantially good optical density, yet exhibit substantially poor resistance to highlighter smear and water. In another example, some inks may be substantially resistant to highlighter smear and water, but have relatively poor optical density.

### BRIEF DESCRIPTION OF THE DRAWINGS

Features and advantages of embodiment(s) of the present disclosure will become apparent by reference to the following detailed description and drawings.
Fig. 1 is a graph depicting measurements of optical density for two embodiments of an ink composition printed on a variety of print media;
Fig. 2 is a graph depicting measurements of the percent of ink transferred for different samples of the two embodiments of the ink composition, each sample being exposed to a different test;
Fig. 3 is a graph depicting the average optical density vs. average single pass smear for sample Ink B and comparative inks C, D, and E; and
Fig. 4 is a graph depicting the average optical density vs. average double pass smear for sample Ink B and comparative inks C, D, and E.

### DETAILED DESCRIPTION

The present invention relates to an ink composition as defined by claims 1-12.

In addition, the present invention also relates to a method of forming an ink composition as defined by claims 13-17.

In addition, the present invention also relates to a method of forming a print on a substrate as defined by claims 18-21.

Embodiment(s) of the ink composition disclosed herein are advantageously substantially durable, exhibit substantially high optical density, and exhibit substantially good print quality. It is believed that the combination of an anionic acrylate copolymer binder and an oxidized self-dispersible pigment contributes to the enhanced durability, optical density, and print quality. Embodiment(s) of the ink may be used in any inkjet printing process, and may be particularly suitable for use in thermal inkjet printing.

The ink composition, as disclosed herein, includes an anionic acrylate copolymer binder and an oxidized self-dispersible pigment in an aqueous ink vehicle.

The anionic acrylate copolymer binder used in the ink composition is generally represented by the formula [CHR-CR'-COOR"]ₙ. It is to be understood that the molecular weight of the copolymer varies. In an embodiment, n ranges from 10 to over 1000; and R, R', and R" are each selected from a hydrogen, an alkyl group, an aryl group, or combinations thereof. Other non-limiting examples of suitable functional groups for R, R', and R" include benzoates, carboxylates, sulfonates, phosphates, borates, and/or combinations thereof. Any of the functional groups may be selected to provide the copolymer with unique properties. It is to be understood that one or more of the functional groups may be selectively placed along the backbone of the copolymer chain. Without being bound to any theory, it is believed that embodiments of the resultant copolymer binder may be configured to have a hydrophilic/hydrophobic balance, which fortuitously and unexpectedly improves the solubility, as well as the water and smear resistance of the ink including the binder, when established on a print medium.

In an embodiment, the copolymer binder is either a graft or block copolymer containing one or more repeat units selected from methyl trimethyl silyl dimethyl ketone acetal copolymers, silated poly (vinyl alcohol), ethoxytriethylene glycol methacrylate, tetrabutylammonium chlorobenzoate, trimethylsilyl methacrylate, 1,1-bis(trimethylsiloxy)-2-methyl propene, or combinations thereof. In another embodiment, the copolymer binder is an anionic acrylate-based group transfer polymerized copolymer binder.

As a non-limiting example, the amount of copolymer binder present in the ink ranges from about 0.5 wt% to about 3 wt%.

In an embodiment, the ink composition may also include a benzoate salt that is solubilized in the ink vehicle. Without being bound by any theory, it is believed that the benzoate salt interacts with the pigment to enhance the pigment stability, ink durability, and printing performance. Non-limiting examples of suitable benzoate salts include ammonium benzoate, alkyl ammonium benzoate, sodium benzoate, potassium benzoate, lithium benzoate, and/or combinations thereof. In an embodiment, the amount of benzoate salt present in the ink composition ranges from about 0.1 wt% to about 3 wt%.

The ink composition further includes an oxidized self-dispersible pigment as a colorant. As used herein, the term "pigment" refers to a colorant particle that is substantially insoluble in the liquid vehicle in which it is used. Self-dispersed pigments include those that have been chemically modified at the surface, for example, with a charge or a polymeric grouping. This chemical modification aids the pigment in becoming and/or substantially remaining dispersed in a liquid. Generally, self-dispersible pigments tend to have greater stability and lower viscosity when compared to traditional pigments and dyes; and, thus provide substantially greater flexibility in formulating the ink composition(s) disclosed herein. A non-self-dispersed pigment utilizes a separate and unattached dispersing agent (e.g., polymers, oligomers, surfactants, etc.) in the liquid vehicle or physically coated on the surface of the pigment.

It is to be understood that the oxidized self-dispersible pigment may be formed via ozone oxidation, or via any other suitable oxidation method.

In an embodiment, the colorant dispersion may include one or more black self-dispersible pigments, or a combination of black self-dispersible pigments and black non-self dispersible pigments. In an embodiment, the amount of black pigment present in the ink composition ranges from about 2 wt% to about 6 wt%. While black pigments are generally referred to herein, it is to be understood that the ink compositions disclosed herein may include any other suitable color pigment (self-dispersible, non-self-dispersible, or combinations thereof).

A non-limiting example of a suitable black self-dispersible pigment is described in U.S. Patent No. 6,852,156, to Yeh et al., issued on February 8, 2005, incorporated by reference herein in its entirety.

Embodiments of the ink composition also include an ink vehicle. As used herein, the term "ink vehicle" refers to the combination of water and solvents (and additives, if desired) to form a vehicle in which the anionic acrylate copolymer binder and colorant dispersion is placed to form an ink composition. Examples of suitable additives include, but are not limited to, surfactants, biocides, buffers, sequestering agents, chelating agents, and/or the like. In a non-limiting example, the ink vehicle includes at least one solvent, a surfactant, and water.

The solvent(s) used in the ink vehicle are water-soluble or miscible organic solvents. Non-limiting examples of suitable solvents for the ink composition include ethoxylated glycerol, 2-methyl-1,3-propanediol, 2-methyl-2,4-pentanediol, 1,5-pentanediol, 2-pyrrolidone, 1-(2-hydroxylethyl)-2-pyrrolidinone, 2-ethyl-2-hydroxymethyl-1,3-propanediol, diethylene glycol, 3-methoxybutanol, 1,3-dimethyl-2-imidazolidinone, 1,2-hexanediol, 1,2-octanediol, 2,5-dimethyl-3-hexyne 2,5-diol, trimethylol propane, 3-hexyne-2,5-diol, sulfolane, 3-pyridyl carbinol, derivatives of pyrridine, and combinations thereof. In an embodiment, the amount of solvent(s) used in the ink ranges from about 2 wt% to about 20 wt%.

Surfactants may be included in the ink composition, at least in part, to assist in controlling the physical properties of the ink, such as jetting stability, waterproofness and bleeding. One or more surfactants may be used in the formulation of the ink. The surfactant(s) may be selected from anionic surfactants, non-ionic surfactants, zwitterionic surfactants, and/or combinations thereof.

Non-limiting examples of suitable anionic surfactants include sodium salts of straight chain fatty acids; potassium salts of straight chain fatty acids; sodium salts of coconut oil fatty acids; potassium salts of coconut oil fatty acids; sodium salts of tall oil fatty acids; potassium salts of tall oil fatty acids; amine salts; acylated polypeptides; linear alkyl benzene sulfonates; higher alkyl benzene sulfonates; benzene; toluene; xylene; cumenesulfonate; lignosulfonates; petroleum sulfonates; N-acyl-n-alkyltaurates; paraffin sulfonates; secondary n-alkanesulfonates; alpha olefin sulfonates; sulfosuccnic esters; alkyl naphalene sulfonates; isethionates; sulfuric acid ester salts; sulfated polyoxyethylenated straight-chain alcohols; sulfated triglyceride oils; phosphoric acid esters; polyphosphoric acid esters; perfluorinated anionic surfactants; and/or combinations thereof.

Non-limiting examples of suitable non-ionic surfactants include alkylphenol ethoxylates; polyoxyethylenates; straight chain alcohol ethoxylates; polyoxyethylenated polyoxypropylene glycols; polyoxyethylenated mercaptans; long chain carboxylic acid esters; glycerol esters of natural acids; polyglyceryl esters of natural acids; glycerol esters of fatty acids; polyglyceryl esters of fatty acids; propylene glycol; sorbitol esters; polyoxyethylenated sorbitol esters; polyoxyethylene glycol esters; polyoxyethylenated fatty acids; polyethylene oxides; polyethylene glycols; alkanolamine condensates; alkanolamides; tertiary acetylenic glycols; polyoxyethylenated silicones; N-alkylpyrrolidones; alkylpolyglycosides; and/or combinations thereof.

Non-limiting examples of suitable zwitterionic surfactants include beta-N-alkylaminopropionic acids; N-alkyl-beta-iminodipropionic acids; imidazoline carboxylates; N-alkylbetaines; amine oxides; sulfobetaine surfactants; and/or combinations thereof.

Other additives may also be incorporated into the ink composition. As used herein, the term "additives" refers to constituents of the ink that operate to enhance performance, environmental effects, aesthetic effects, or other similar properties of the ink. As provided hereinabove, examples of other suitable additives for the ink include buffers, pH adjusting agents, biocides, sequestering agents, chelating agents, or the like, or combinations thereof.

The balance of the ink vehicle includes water.

Forming embodiment(s) of the ink composition includes providing or making the ink vehicle, and adding the binder and the pigment dispersion to the ink vehicle. In an embodiment, the benzoate salt is also added to the ink vehicle. As a non-limiting example, the binder and the benzoate salt are added to the ink vehicle prior to adding the pigment dispersion.

In an embodiment of a method of using the embodiment(s) of the ink composition disclosed herein, the ink composition is established on at least a portion of a substrate to form an image/print. The amount of ink composition used depends, at least in part, on the desirable image/print to be formed. A non-limiting example of a suitable inkjet printing technique includes drop-on-demand inkjet printing, more particularly, thermal inkjet printing. Other non-limiting examples of suitable inkjet printing techniques include piezoelectric inkjet printing and continuous inkjet printing. Suitable printers for such inkjet printing process(es) include portable drop-on-demand inkjet printers (e.g., handheld printers, arm mountable printers, wrist mountable printers, etc.), desktop drop-on-demand inkjet printers, or combinations thereof. Non-limiting examples of suitable substrates include coated papers, non-coated papers, business papers (e.g., brochures), labels, post card papers, glossy papers, photo papers, transparencies, and/or the like, and/or combinations thereof.

To further illustrate the embodiment(s) of the present disclosure, examples are given herein. It is to be understood that these examples are provided for illustrative purposes and are not to be construed as limiting the scope of the disclosed embodiment(s).

### EXAMPLE 1

Two inks were prepared according to the embodiments disclosed herein. The first ink (Ink A) included about 0.9 wt% of an acrylate group transfer polymerized (GTP) copolymer binder manufactured from E. I. du Pont de Nemours and Company, Wilmington, DE, and about 3.5 wt% of an ozone-oxidized self-dispersible black pigment in an ink vehicle. The ink vehicle included a solvent system of 2-pyrrolidone, LEG-1, 1,5-pentanediol, and water. The ink vehicle also included an ethoxylated alcohol surfactant. The second ink (Ink B) had a similar formulation as Ink A, however, Ink B had a slightly higher pigment loading (about 3.75 wt%) and included 0.2 wt% of ammonium benzoate.

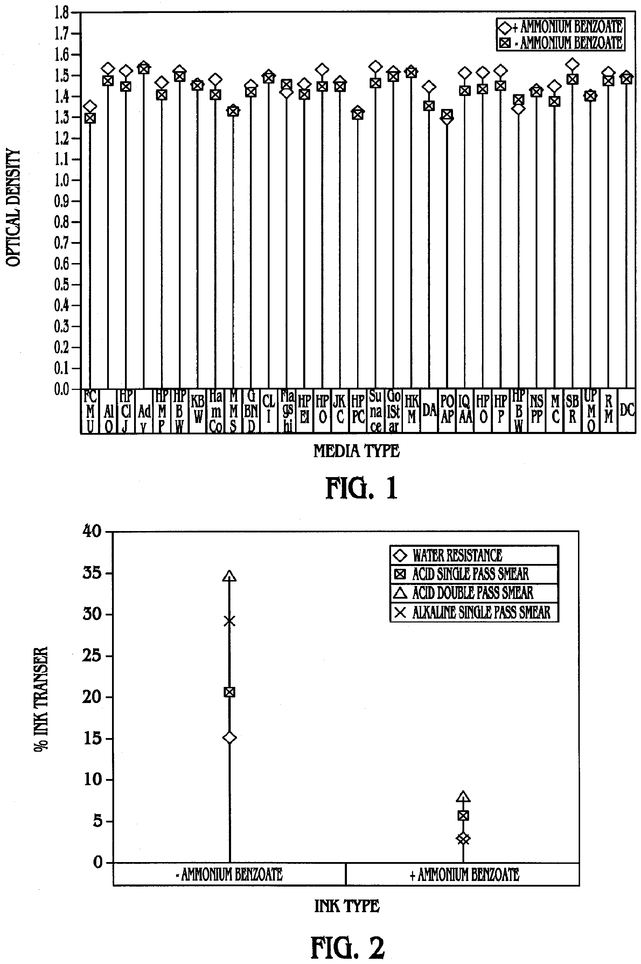

Inks A and B were printed on numerous plain papers using an HP DESKJET 6540 printer. The papers included Hewlett Packard (hereinafter "HP") Advanced paper (Adv), HP All-In-One paper (AIO), Data Copy paper (DC), HP Color Inkjet paper (HPCIJ), HP Multipurpose paper (HPMP), HP BrightWhite paper (HPBW), Gilbert Bond paper (GBND), Kodak BrightWhite paper (KBW), Hammermill copy paper (HamCo), Microprint Multisystems paper (MMS), Flagship Multipurpose paper (Flagshi), HP Everyday Inkjet paper (HPEI), JK copier paper (JKC), Hansol Multipurpose PPC paper (HPPC), Golden Star Multipurpose paper (GOISTAR), Oji Sunace PPC paper (Sunace), Hokuetsu Kin Mari paper (HKM), Double A Premium paper (DA), PaperOne all purpose paper (POAP), IQ Allround paper (IQAA), HP Office paper (HPO, first occurrence along x-axis in Figure 1 is one region of the paper, and second occurrence along x-axis in Figure 1 is another region of the paper), HP Printing paper (HPP), HP BrightWhite 80 Gsm paper (HPBW, second occurrence along x-axis in Figure 1), Multicopy Original White paper (MC), Stein Beis Recyconomic paper (SBR), Rey Matt paper (RM), First choice multiuse (FCMU), Classic laid imaging (CLI), Navigator soporset preprint (NSPP), and UPM Office Multifunction (UPMO). The abbreviations correspond to those used to identify the papers in Figure 1.

The optical density was measured for Inks A and B printed on each of the media using a Greytag Macbeth Densitometer. The optical density results for each of the papers provided immediately above are graphically depicted in Figure 1.

As shown in Figure 1, both Inks A and B exhibited relatively high optical density. In this example, the higher number corresponds to higher optical density, and generally, an optical density greater than or equal to 1.3 was considered high. These results indicate that images printed using the inks disclosed herein are relatively dark, have minimal black to color bleed, have excellent water resistance, have excellent resistance to acid and alkaline smear, and/or combinations thereof. While the optical density for Ink B (i.e., the ink including the ammonium benzoate) was slightly higher than the optical density for Ink A, the optical densities are very similar. As such, both Inks A and B exhibit desirable print quality.

The durability of the inks with respect to highlighter resistance and smear was also evaluated for inks A and B. These inks were printed on a wide variety of plain papers, such as, for example, HP Advanced paper, HP BrightWhite paper, HP All-in-One paper, Data Copy paper, and Gilbert Bond paper. The highlighters used to evaluate the durability of the inks included Sanford Accent Fiber tip highlighters, Sharpie Accent Fiber tip highlighters, Avery Hi-Liter Plastic Nib highlighters, Sharpie Accent Comfort Grip highlighters, Staples brand highlighters, Sharpie Plastic Nib highlighters, Bic Bright liner highlighters, Stabilo Boss highlighters, Zebra Zazzle highlighters, and Faber-Castell Textliner highlighters. The prints were tested for single pass and double pass highlighter smear about five minutes and about one hour after printing the ink on the respective print media. The ink transferred or smeared from the printed region to the unprinted region of the paper was measured using a Greytag Macbeth Densitometer. These results are graphically depicted in Figure 2. As shown in Figure 2, Ink B (i.e., the ink including the ammonium benzoate) was more resistant to highlighter smear when compared to ink A.

The prints were also tested for their resistance to water. This was accomplished by dripping water over the printed areas of the respective print media about five minutes after printing and about one hour after printing. The percent of ink transferred for each sample was measured using a Greytag Macbeth Densitometer, and the results are also shown in Figure 2. Generally, the lower the percent transfer the better the resistance to highlighter smear and water. As shown in Figure 2, Ink B demonstrated higher resistance to water when compared to Ink A.

### EXAMPLE 2

Ink B from Example 1 was also used in this example. Comparative inks C, D and E were used instead of Ink A (of Example 1). Comparative inks C, D and E included a surface modified self dispersed carbon black pigment as colorant, solvents, surfactants, and in some cases additives. None of the comparative inks were formulated with a combination of oxidized carbon black and ammonium benzoate according to embodiments disclosed herein.

The optical density and durability (with respect to single and double pass highlighter smear) of Ink B and comparative inks C, D, and E were measured and compared. The inks were printed on Gilbert bond paper, HP Multipurpose paper, HP BrightWhite paper, HP Advanced paper, and HP all-in-one paper using an HP DESKJET 6540 printer.

The optical densities were measured using a Greytag Macbeth Densitometer. The prints were tested for single pass and double pass highlighter smear about five minutes and about one hour after printing the ink on the print media.

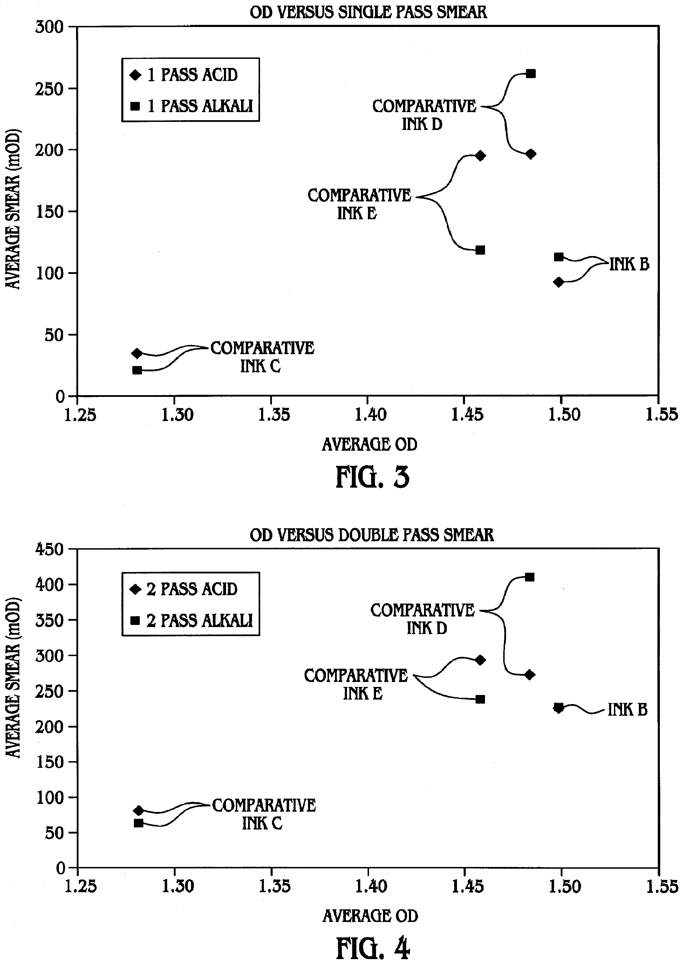

The optical density vs. single pass smear results (mOD) are shown in Figure 3, and the optical density vs. double pass smear results (mOD) are shown in Fig. 4. All of the results for the comparative inks illustrate the typical tradeoff between optical density and smear, i.e., when high optical density is achieved, smear is generally higher; and when less smear is achieved, optical density is generally lower.

As depicted in Figures 3 and 4, comparative Ink C had lower smear and lower optical density, while comparative inks D and E had higher optical density and higher smear. In sharp contrast, Ink B exhibited both high optical density and relatively low smear.

While several embodiments have been described in detail, it will be apparent to those skilled in the art that the disclosed embodiments may be modified. Therefore, the foregoing description is to be considered exemplary rather than limiting.

## Claims

1. An ink composition, comprising:
an anionic acrylate copolymer binder;
an oxidized self-dispersible pigment; and
an aqueous vehicle; wherein said copolymer binder is either a graft or block copolymer containing one or more repeat units selected from methyl trimethyl silyl dimethyl ketone acetal copolymers, silated poly (vinyl alcohol), ethoxytriethylene glycol methacrylate, tetrabutylammonium chlorobenzoate, trimethylsilyl methacrylate, 1,1-bis(trimethylsiloxy)-2-methyl propene, or combinations thereof.

2. The ink composition as defined in claim 1 wherein an amount of the anionic acrylate copolymer binder present in the ink composition ranges from about 0.5 wt% to about 3 wt%.

3. The ink composition as defined in claim 1, further comprising a benzoate salt.

4. The ink composition as defined in claim 3 wherein the benzoate salt is selected from ammonium benzoate, alkyl ammonium benzoate, sodium benzoate, potassium benzoate, lithium benzoate, and combinations thereof.

5. The ink composition as defined in claim 3 wherein an amount of the benzoate salt present in the ink composition ranges from about 0.1 wt% to about 3 wt%.

6. The ink composition as defined in claim 1 wherein the aqueous ink vehicle, includes:
at least one solvent;
a surfactant; and
water.

7. The ink composition as defined in claim 6 wherein the at least one solvent is selected from ethoxylated glycerol, 2-methyl-1,3-propanediol, 2-methyl-2,4-pentanediol, 1,5-pentanediol, 2-pyrrolidone, 1-(2-hydroxylethyt)-2-pyrrolidinone, 2-ethyl-2-hydroxymethyl-1,3-propanediol, diethylene glycol, 3-methoxybutanol, 1,3-dimethyl-2-imidazolidinone, 1,2 -hexanediol, 1,2-octanediol, 2,5-dimethyl-3-hexyne 2,5-diol, trimethylol propane, 3-hexyne-2,5-diol, sulfolane, 3-pyridyl carbinol, derivatives of pyrridine, and combinations thereof.

8. The ink composition as defined in claim 6 wherein the surfactant is selected from anionic surfactants, non-ionic surfactants, zwitterionic surfactants, and combinations thereof.

9. The ink composition as defined in ctaim 1 wherein the anionic acrylate copolymer binder has the following formula: [CHR-CR'-COOR"]ₙ, wherein R, R', and R" are each selected from a hydrogen, an alkyl group, an aryl group, benzoates, carboxylates, sulfonates, phosphates, borates, and combinations thereof, and wherein n ranges from 10 to 1000.

10. The ink composition as defined in claim 1 wherein the anionic acrylate copolymer binder is an acrylate-based group transfer polymerized copolymer binder.

11. The ink composition as defined in claim 1 wherein the oxidized self-dispersible pigment is ozone-oxidized.

12. A method of forming an ink composition, the method comprising:
providing an aqueous ink vehicle;
adding an anionic acrylate copolymer binder to the aqueous ink
vehicle; and
adding an oxidized self-dispersible pigment to the aqueous ink
vehicle, wherein said copolymer binder is either a graft or block copolymer containing one or more repeat units selected from methyl trimethyl silyl dimethyl ketone acetal copolymers, silated poly (vinyl alcohol), ethoxytriethylene glycol methacrylate, tetrabutylammonium chlorobenzoate, trimethylsilyl methacrylate, 1,1-bis(trimethylsiloxy)-2-methyl propene, or combinations thereof.

13. The method as defined in claim 12, further comprising adding a benzoate salt to the aqueous ink vehicle.

14. The method as defined in claim 13 wherein the anionic acrylate copolymer binder and the benzoate salt are added to the aqueous ink vehicle prior to adding the oxidized self-dispersible pigment.

15. A method of forming a print on a substrate, the method comprising:
providing an ink, including:
an anionic acrylate copolymer binder;
an oxidized self-dispersible pigment; and
an aqueous ink vehicle; and
establishing the ink on the substrate, wherein said copolymer binder is either a graft or block
copolymer containing one or more repeat units selected from methyl trimethyl silyl dimethyl ketone acetal copolymers, silated poly (vinyl alcohol), ethoxytriethylene glycol methacrylate, tetrabutylammonium chlorobenzoate, trimethylsilyl methacrylate, 1,1-bis(trimethylsiloxy)-2-methyl propene, or combinations thereof.

## Patentansprüche

1. Tintenzusammensetzung, Folgendes umfassend:
ein anionisches Acrylatcopolymerbindemittel;
ein oxidiertes selbstdispergierbares Pigment; und
eine wässrige Trägersubstanz; wobei das Copolymerbindemittel entweder ein Pfropf- oder ein Blockcopolymer mit einer oder mehreren Wiederholungseinheiten, ausgewählt aus Methyltrimethylsilyldimethylketonacetal-Copolymeren, siliertem Poly(vinylalkohol), Ethoxytriethylenglycolmethacrylat, Tetrabutylammoniumchlorbenzoat, Trimethylsilylmethacrylat, 1,1-Bis(trimethylsiloxy)-2-methylpropen oder Kombinationen daraus, ist.

2. Tintenzusammensetzung nach Anspruch 1, wobei eine Menge des in der Tintenzusammensetzung vorliegenden anionischen Acrylatcopolymerbindemittels von etwa 0,5 Gew.-% bis etwa 3 Gew.-% reicht.

3. Tintenzusammensetzung nach Anspruch 1, ferner ein Benzoatsalz umfassend.

4. Tintenzusammensetzung nach Anspruch 3, wobei das Benzoatsalz ausgewählt ist aus Ammoniumbenzoat, Alkylammoniumbenzoat, Natriumbenzoat, Kaliumbenzoat, Lithiumbenzoat und Kombinationen daraus.

5. Tintenzusammensetzung nach Anspruch 3, wobei eine Menge des in der Tintenzusammensetzung vorliegenden Benzoatsalzes von etwa 0,1 Gew.-% bis etwa 3 Gew.-% reicht.

6. Tintenzusammensetzung nach Anspruch 1, wobei die wässrige Tintenträgersubstanz Folgendes enthält:
wenigstens ein Lösungsmittel;
ein Tensid; und
Wasser.

7. Tintenzusammensetzung nach Anspruch 6, wobei das wenigstens eine Lösungsmittel ausgewählt ist aus der Gruppe bestehend aus ethoxyliertem Glycerol, 2-Methyl-1,3-propandiol, 2-Methyl-2,4-pentandiol, 1,5-Pentandiol, 2-Pyrrolidon, 1-(2-Hydroxylethyl)-2-pyrrolidinon, 2-Ethyl-2-hydroxymethyl-1,3-propandiol, Diethylenglycol, 3-Methoxybutanol, 1,3-Dimethyl-2-imidazolidinon, 1,2-Hexandiol, 1,2-Octandiol, 2,5-Dimethyl-3-hexin-2,5-diol, Trimethylolpropan, 3-Hexin-2,5-diol, Sulfolan, 3-Pyridylcarbinol, Derivaten von Pyrridin und Kombinationen daraus.

8. Tintenzusammensetzung nach Anspruch 6, wobei das Tensid ausgewählt ist aus anionischen Tensiden, nichtionischen Tensiden, zwitterionischen Tensiden und Kombinationen daraus.

9. Tintenzusammensetzung nach Anspruch 1, wobei das anionische Acrylatcopolymerbindemittel die folgende Formel aufweist: [CHR-CR'-COOR"]ₙ, wobei R, R' und R" jeweils ausgewählt sind aus Wasserstoff, einer Alkylgruppe, einer Arylgruppe, Benzoaten, Carboxylaten, Sulfonaten, Phosphaten, Boraten und Kombinationen daraus und wobei n von 10 bis 1000 reicht.

10. Tintenzusammensetzung nach Anspruch 1, wobei das anionische Acrylatbindemittel ein gruppentransferpolymerisiertes Copolymerbindemittel auf Acrylatbasis ist.

11. Tintenzusammensetzung nach Anspruch 1, wobei das oxidierte selbstdispergierbare Pigment ozonoxidiert ist.

12. Verfahren zum Ausbilden einer Tintenzusammensetzung, wobei das Verfahren Folgendes umfasst:
Bereitstellen einer wässrigen Tintenträgersubstanz;
Hinzufügen eines anionischen Acrylatcopolymerbindemittels zu der wässrigen Tintenträgersubstanz; und
Hinzufügen eines oxidierten selbstdispergierbaren Pigments zu der wässrigen Tintenträgersubstanz, wobei das Copolymerbindemittel entweder ein Pfropf- oder ein Blockcopolymer mit einer oder mehreren Wiederholungseinheiten, ausgewählt aus Methyltrimethylsilyldimethylketonacetal-Copolymeren, siliertem Poly(vinylalkohol), Ethoxytriethylenglycolmethacrylat, Tetrabutylammoniumchlorbenzoat, Trimethylsilylmethacrylat, 1,1-Bis(trimethylsiloxy)-2-methylpropen oder Kombinationen daraus, ist.

13. Verfahren nach Anspruch 12, ferner umfassend das Hinzufügen eines Benzoatsalzes zu der wässrigen Tintenträgersubstanz.

14. Verfahren nach Anspruch 13, wobei das anionische Acrylatcopolymerbindemittel und das Benzoatsalz zu der wässrigen Tintenträgeresubstanz hinzugefügt werden, bevor das oxidierte selbstdispergierbare Pigment hinzugefügt wird.

15. Verfahren zum Ausbilden eines Drucks auf einem Substrat, wobei das Verfahren Folgendes umfasst:
Bereitstellen einer Tinte, Folgendes enthaltend:
ein anionisches Acrylatcopolymerbindemittel;
ein oxidiertes selbstdispergierbares Pigment; und
eine wässrige Tintenträgersubstanz; und
Aufbringen der Tinte auf dem Substrat, wobei das Copolymerbindemittel entweder ein Pfropf- oder ein Blockcopolymer mit einer oder mehreren Wiederholungseinheiten, ausgewählt aus Methyltrimethylsilyldimethylketonacetal-Copolymeren, siliertem Poly(vinylalkohol), Ethoxytriethylenglycolmethacrylat, Tetrabutylammoniumchlorbenzoat, Trimethylsilylmethacrylat, 1,1-Bis(trimethylsiloxy)-2-methylpropen oder Kombinationen daraus, ist.

## Revendications

1. Composition d'encre comprenant :
un liant copolymère d'acrylate anionique ;
un pigment autodispersible oxydé ; et
un véhicule aqueux ; dans laquelle ledit liant copolymère est soit un copolymère greffé soit un copolymère bloc contenant une ou plusieurs unités de répétition parmi les copolymères d'acétal méthyle triméthylsilyle diméthyle cétone, poly silylé (alcool de vinyle), méthacrylate de glycol éthoxytriéthylène, chlorobenzoate de tetrabutylammonium, méthacrylate de triméthylsilyle, 1,1-bis(triméthylsiloxy)-2-propène de méthyle ou des combinaisons de ces derniers.

2. Composition d'encre selon la revendication 1 dans laquelle une quantité du liant copolymère d'acrylate anionique présente dans la composition d'encre est comprise entre environ 0,5 % en poids et environ 3 % en poids.

3. Composition d'encre selon la revendication 1, comprenant en outre un sel de benzoate.

4. Composition d'encre selon la revendication 3 dans laquelle le sel de benzoate est sélectionné à partir de benzoate d'ammonium, benzoate d'alkylammonium, benzoate de sodium, benzoate de potassium, benzoate de lithium et des combinaisons de ces derniers.

5. Composition d'encre selon la revendication 3 dans laquelle une quantité du sel de benzoate présente dans la composition d'encre est comprise entre environ 0,1 % en poids et environ 3 % en poids.

6. Composition d'encre selon la revendication 1 dans laquelle le véhicule d'encre aqueux comprend :
au moins un solvant ;
un tensioactif ; et
de l'eau.

7. Composition d'encre selon la revendication 6 dans laquelle l'au moins un solvant est sélectionné à partir de glycérol éthoxylé, 2-méthyle-1,3-propanédiol, 2-méthyle-2,4-pentanédiol, 1,5-pentanédiol, 2-pyrrolidone, 1-(2-hydroxyléthyle)-2-pyrrolidinone, 2-éthyle-2-hydroxyméthyle-1,3-propanédiol, diéthylène glycol, 3-méthoxybutanol, 1,3-diméthyle-2-imidazolidinone, 1,2-hexanédiol, 1,2-octanédiol, 2,5-diméthyle-3-hexyne-2,5-diol, triméthylolpropane, 3-hexyne-2,5-diol, sulfolane, 3-carbinol de pyridyle, dérivés de pyridine et des combinaisons de ces derniers.

8. Composition d'encre selon la revendication 6 dans laquelle le tensioactif est sélectionné à partir de tensioactifs anioniques, tensioactifs non anioniques, tensioactifs zwitterioniques et des combinaisons de ces derniers.

9. Composition d'encre selon la revendication 1 dans laquelle le liant copolymère d'acrylate anionique est représenté par la formule suivante : [CHR-CR'-COOR"]ₙ, dans laquelle R, R' et R" sont sélectionnés à partir d'un hydrogène, d'un groupe alkyle, d'un groupe aryle, de benzoates, carboxylates, sulfonates, phosphates, borates et des combinaisons de ces derniers et dans laquelle n varie entre 10 et 1 000.

10. Composition d'encre selon la revendication 1 dans laquelle le liant copolymère d'acrylate anionique est un liant copolymère polymérisé par transfert de groupe à base d'acrylate.

11. Composition d'encre selon la revendication 1 dans laquelle le pigment autodispersible oxydé est de l'ozone oxydé.

12. Procédé de formation d'une composition d'encre, le procédé comprenant :
l'utilisation d'un véhicule d'encre aqueux ;
l'ajout d'un liant copolymère d'acrylate anionique au véhicule d'encre aqueux ; et
l'ajout d'un pigment autodispersible oxydé au véhicule d'encre aqueux, dans lequel ledit liant copolymère est soit un copolymère greffé soit un copolymère bloc contenant une ou plusieurs unités de répétition sélectionnées parmi les copolymères d'acétal méthyle triméthylsilyle diméthyle cétone, poly silylé (alcool de vinyle), méthacrylate de glycol éthoxytriéthylène, chlorobenzoate de tetrabutylammonium, méthacrylate de triméthylsilyle, 1,1-bis(triméthylsiloxy)-2-propène de méthyle ou des combinaisons de ces derniers.

13. Procédé selon la revendication 12 comprenant en outre l'ajout d'un sel de benzoate au véhicule d'encre aqueux.

14. Procédé selon la revendication 13 dans lequel le liant copolymère d'acrylate anionique et le sel de benzoate sont ajoutés au véhicule d'encre aqueux avant l'ajout du pigment autodispersible oxydé.

15. Procédé de formation d'une impression sur un substrat, le procédé comprenant :
l'utilisation d'une encre, comprenant :
un liant copolymère d'acrylate anionique ;
un pigment autodispersible oxydé ; et
un véhicule d'encre aqueux ; et
l'établissement d'une encre sur le substrat, dans lequel ledit liant copolymère est soit un copolymère greffé soit un copolymère bloc contenant une ou plusieurs unités de répétition sélectionnées parmi les copolymères d'acétal méthyle triméthylsilyle diméthyle cétone, poly silylé (alcool de vinyle), méthacrylate de glycol éthoxytriéthylène, chlorobenzoate de tetrabutylammonium, méthacrylate de triméthylsilyle, 1,1-bis(triméthylsiloxy)-2-propène de méthyle ou des combinaisons de ces derniers.
